# EUROPEAN PATENT APPLICATION

(11) **EP 1 477 603 A1**
(43) Date of publication of application: **17.11.2004**
(21) Application number: 04000293.3
(22) Date of filing: 09.01.2004
(51) Int. Cl.: D06F 37/20, F16F 7/09

(54) **Variable damping type damper and washing machine having the same**

(30) Priority: 15.05.2003 KR 2003031012
(71) Applicant: LG ELECTRONICS INC., Seoul (KR)
(72) Inventor: Park, Gwan-Ryong, Nowon-Gu Seoul (KR); Kim, Jae-Hyun, Geumcheon-Gu, Seoul (KR); Park, Seung-Chul, Gwangmyeong Gyeonggi-Do (KR)
(74) Representative: Schippan, Ralph, Dr.-Ing.

(57) **Abstract**

A variable damping type damper and a washing machine having the same comprise: a cylinder of which one side is provided with a receiving space having a certain depth and another side thereof is coupled to the cabinet or the tub; a rod of which one side is relative-movably inserted into the receiving space of the cylinder and another side thereof is coupled to the cabinet or the tub; a guide bar provided at an end portion of the rod; a variable volume frictional means expanded and contracted in itself by a difference of flow amount introduced/ exhausted into/from an inner space by being coupled to the guide bar, and adhered/detached to/from an inner circumferential surface of the receiving space of the cylinder; a volume type slider performing a relative movement with the variable volume frictional means by being slidably inserted into the guide bar, for causing fluid flow inside the variable volume frictional means; and a frictional member fixedly coupled to the volume type slider for generating a frictional force with the inner circumferential surface of the receiving space of the cylinder. According to this, steady state vibration and transient state vibration generated from a tub assembly during an entire process for washing laundry are prevented from being transmitted to a cabinet, thereby minimizing noise leaked to outside.

## Description

### BACKGROUND OF THE INVENTION

### 1. Field of the Invention

The present invention relates to a variable damping type damper and a washing machine having the same, and more particularly, to a variable damping type damper capable of minimizing a transmission of vibration to other components by effectively absorbing steady state vibration and transient state vibration by using a flow amount difference of air, and a washing machine having the same.

### 2. Description of the Conventional Art

Generally, a washing machine washes laundry by performing a washing operation, a rinsing operation, and a dehydration operation. Washing methods of the washing machine include a method for washing laundry accordingly as vortex generated when a washing bar having blades is rotated in the middle of a laundry basin applies an impact to laundry, a method for washing laundry accordingly as vortex generated when a rotation blade mounted at a lower portion of a laundry basin is rotated applies an impact to laundry, a method for washing laundry by an impact that laundry drops by rotating a drum in which laundry is put in a horizontal direction, and etc.

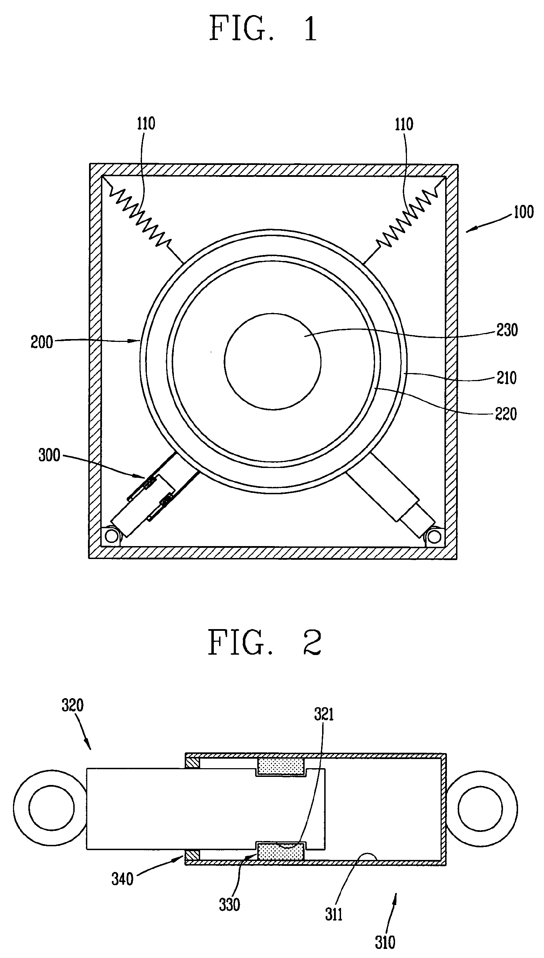

Figure 1 is a frontal section view showing one embodiment of a general washing machine.

As shown, the washing machine comprises a cabinet 100 having an inner space of a predetermined shape; a tub 210 positioned in the cabinet 100; a drum 220 rotatably inserted into the tub 210 and through which laundry is introduced; a driving motor 230 mounted at a rear surface of the tub 210 for rotating the drum 220; a spring 110 mounted between the cabinet 100 and an upper portion of the tub 210 for elastically supporting the tub 210; a damper 300 mounted between the cabinet 100 and a lower portion of the tub 210 for absorbing vibration; a water supply means (not shown) for supplying washing water into the tub 210; a drain means (not shown) for draining water inside the tub 210; and a door (not shown) for opening and closing the drum 220.

The tub 210, the drum 220, and the driving motor 230 constitute one tub assembly 200, and the tub assembly 200 is supported by the damper 300 and the spring 110.

For a washing operation in the washing machine, first, the door is opened thus to put laundry into the drum 220, then the door is closed, and detergent and washing water are put into the drum, thereby rotating the drum 220 by a driving of the driving motor 230. After the washing operation, a rinsing operation is performed and then washing water is drained by the drain means. Then, a dehydration operation that washing water remaining on the laundry is removed by a centrifugal force accordingly as the drum 220 is rotated with a high speed is performed.

In a general washing machine, vibration is generated in the tub assembly at the time of a washing operation or a dehydration operation, and the vibration is absorbed by the spring 110 and the damper 300 thus to be prevented from being transmitted to the cabinet 100.

If vibration generated from the tub assembly 200 is transmitted to the cabinet 100, great vibration noise is generated at the cabinet 100, which causes uncomfortable feeling and degrades a reliability of a product. Accordingly, minimizing vibration noise is a great task.

Figure 2 is a frontal section view showing a damper constituting the washing machine. As shown, the damper 300 comprises a first body 310 having one side relative-movably coupled to the tub 210 and having a frictional surface 311 of a cylindrical shape at an inner portion of another side thereof; a second body 320 having one side relative-movably coupled to the cabinet 100 and having another side inserted into the frictional surface 311 of the first body 310; and a frictional member 330 fixedly coupled to the second body 320 to be in contact with the frictional surface 311 of the first body for generating a frictional force at the time of moving. Also, a guide bush 340 for blocking a gap between the first body 310 and the second body 320 is coupled to an inlet of the frictional surface 311 of the first body 310.

The frictional member 330 is formed as ring shape having a certain thickness and length, and a coupling groove 321 having a certain depth and length is formed at an outer circumferential surface of the second body 320 at one side thereof. The frictional member 330 is inserted into the coupling groove 321 of the second body. The outer circumferential surface of the frictional member 330 comes into contact with an inner circumferential surface of the first body 310, that is, the frictional surface 311.

In the damper 300, when vibration generated from the tub assembly 200 is transmitted, the second body 320 moves towards a straight line direction and thereby the frictional member 330 is moved together. According to this, a constant friction between the outer circumferential surface of the frictional member 330 and the frictional surface 311 of the first body is generated, thereby absorbing vibration transmitted from the tub assembly 200.

However, in the washing machine, a degree of vibration generated from the tub assembly 200 is different in an entire process for washing laundry. That is, steady state vibration is generated in a normal state at the time of a washing operation or a dehydration operation, and transient state vibration is generated in a process for reaching a normal dehydration speed at the time of a dehydration operation. Therefore, by the damper 300 which generates a constant frictional force, steady state vibration and transient state vibration generated from the tub assembly 202 can not be sufficiently absorbed, so that vibration generated from the tub assembly 200 is transmitted to the cabinet 100 thus to generate noise outwardly.

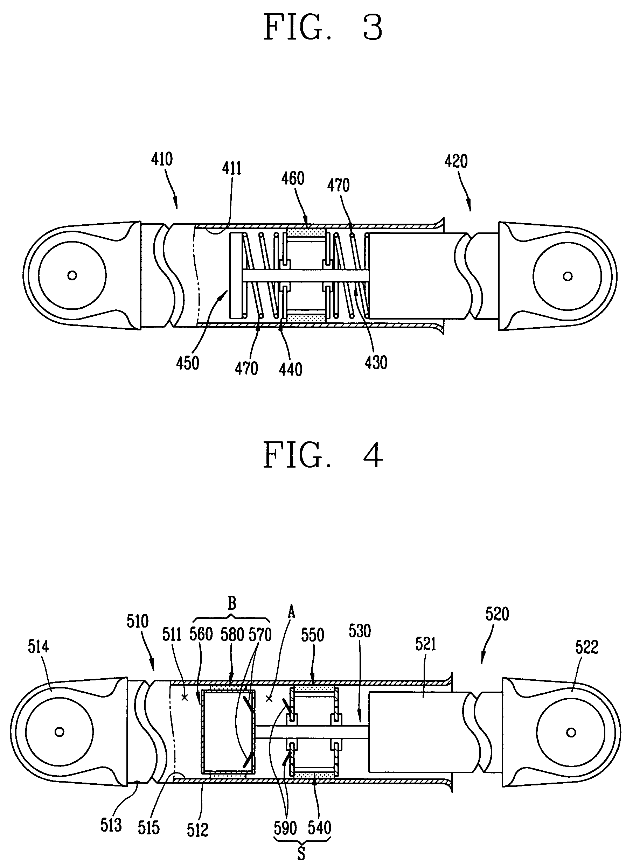

Figure 3 is a frontal section view showing another embodiment of the damper constituting the washing machine.

As shown, the damper comprises a first body 410 having a frictional surface 411 of a cylindrical shape at an inner portion at one side thereof; a second body 420 inserted into the frictional surface 411 of the first body 410; a guide bar 430 having a certain length and provided at one side of the first body 410; a slider 440 formed as a cylindrical shape and movably inserted into the guide bar 430; a stopper 450 coupled to an end portion of the guide bar 430 for limiting a movement distance of the slider 440; a frictional member 460 fixedly coupled to an outer surface of the slider 440 thus to be adhered to the frictional surface 411 of the first body; and springs 470 respectively positioned at both sides of the slider 440.

An outer diameter of the guide bar 430 is smaller than an inner diameter of the frictional surface 411 of the first body, and the stopper 450 of a disc shape having a certain thickness has an outer diameter smaller than the inner diameter of the frictional surface 411 of the first body. One of the springs 470 which are coil springs is positioned between one side surface of the slider 440 and the stopper 450, and the other is positioned between another side surface of the slider 440 and an end surface of the second body 420.

In the damper, when vibration transmitted form the tub assembly 200 is less, that is, at the time of a normal state of steady state vibration, the first body 410 and the slider 440 become integral under a state that the slider 440 is adhered to the frictional surface 411. According to this, the slider 440 is elastically supported by the springs 470 thus to be moved along the guide bar 430, thereby absorbing vibration.

On the contrary, when transient state vibration is generated in the process for reaching a normal dehydration speed during a dehydration operation, the vibration is not sufficiently absorbed thus to cause noise.

### SUMMARY OF THE INVENTION

Therefore, an object of the present invention is to provide a variable damping type damper and a washing machine having the same, and more particularly, to a variable damping type damper capable of minimizing a transmission of vibration to other components by effectively absorbing steady state vibration and transient state vibration by using a flow amount difference of air, and a washing machine having the same.

To achieve these and other advantages and in accordance with the purpose of the present invention, as embodied and broadly described herein, there is provided a variable damping type damper comprising: a cylinder provided with a receiving space having a certain depth at one side thereof; a rod relative-movably inserted into the receiving space of the cylinder; a guide bar provided at the rod; a variable volume frictional means expanded and contracted in itself by a difference of flow amount introduced/ exhausted into/from an inner space by being coupled to the guide bar, and adhered/detached to/from an inner circumferential surface of the receiving space of the cylinder; a volume type slider performing a relative movement with the variable volume frictional means by being slidably inserted into the guide bar, for causing fluid flow inside the variable volume frictional means; and a frictional member fixedly coupled to the volume type slider for generating a frictional force with the inner circumferential surface of the receiving space of the cylinder.

To achieve these and other advantages and in accordance with the purpose of the present invention, as embodied and broadly described herein, there is also provided a washing machine comprising a cabinet having an inner space of a predetermined shape; and a tub positioned in the cabinet and filled with washing water, the washing machine provided with a variable damping type damper, comprising: a cylinder of which one side is provided with a receiving space having a certain depth and another side thereof is coupled to the cabinet or the tub; a rod of which one side is relative-movably inserted into the receiving space of the cylinder and another side thereof is coupled to the cabinet or the tub; a guide bar provided at an end portion of the rod; a variable volume frictional means expanded and contracted in itself by a difference of flow amount introduced/ exhausted into/from an inner space by being coupled to the guide bar, and adhered/detached to/from an inner circumferential surface of the receiving space of the cylinder; a volume type slider performing a relative movement with the variable volume frictional means by being slidably inserted into the guide bar, for causing fluid flow inside the variable volume frictional means; and a frictional member fixedly coupled to the volume type slider for generating a frictional force with the inner circumferential surface of the receiving space of the cylinder.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a frontal section view showing one embodiment of a general washing machine;
Figure 2 is a frontal section view showing a damper constituting the washing machine;
Figure 3 is a frontal section view showing another embodiment of the damper constituting the washing machine;
Figure 4 is a frontal section view showing one embodiment of a variable damping type damper according to the present invention;
Figure 5 is a sectional view showing the variable damping type damper by a partial enlargement;
Figure 6 is a frontal section view showing another embodiment of the variable damping type damper according to the present invention;
Figure 7 is a frontal section view showing a washing machine provided with the variable damping type damper according to the present invention; and
Figures 8, 9, 10, and 11 are sectional views respectively showing an operational state of the variable damping type damper according to the present invention.

### DETAILED DESCRIPTION OF THE PREFERRED EMBODIMENTS

Reference will now be made in detail to the preferred embodiments of the present invention, examples of which are illustrated in the accompanying drawings.

Hereinafter, a variable damping type damper and a washing machine having the same will be explained with reference to attached drawings.

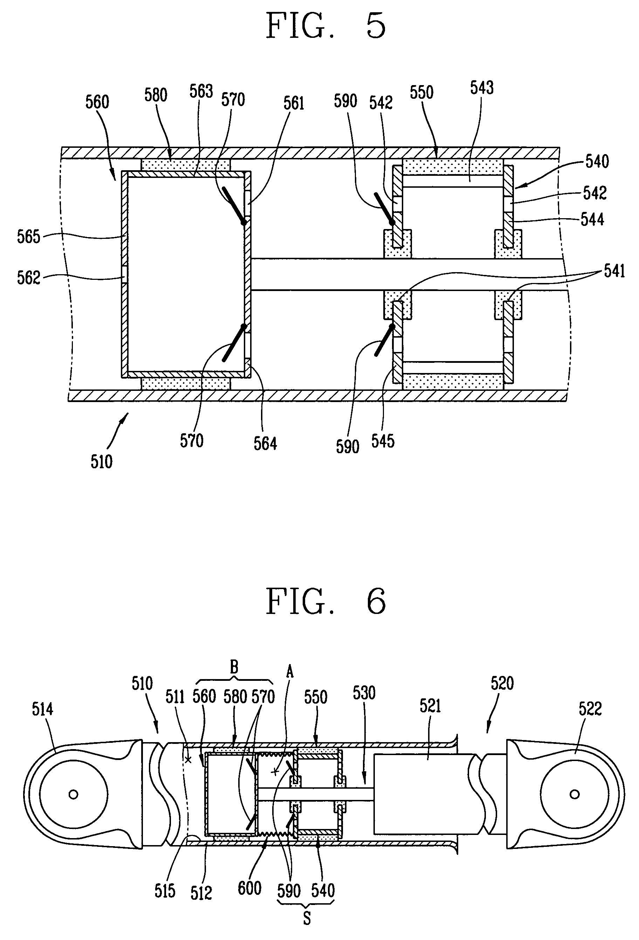

Figure 4 is a frontal section view showing one embodiment of a variable damping type damper according to the present invention, and Figure 5 is a sectional view showing the variable damping type damper by a partial enlargement.

As shown, the variable damping type damper according to the present invention comprises: a cylinder 510 provided with a receiving space 511 having a certain depth at one side thereof; a rod 520 relative-movably inserted into the receiving space 511 of the cylinder 510; a guide bar 530 provided at the rod 520; a variable volume frictional means B expanded and contracted in itself by a difference of flow amount introduced/ exhausted into/from an inner space by being coupled to the guide bar 530, and adhered/detached to/from an inner circumferential surface of the receiving space 511 of the cylinder 510; a volume type slider S performing a relative movement with the variable volume frictional means B by being slidably inserted into the guide bar 530, for causing fluid flow inside the variable volume frictional means B; and a frictional member 550 fixedly coupled to the volume type slider S for generating a frictional force with the inner circumferential surface of the receiving space 511 of the cylinder 510.

The cylinder 510 comprises a body portion 512 with a certain length; a receiving space 511 of a cylindrical shape having a certain depth in a longitudinal direction at one side of the body portion 512; a penetration hole 513 connected to the receiving space 511 at an outer circumferential wall of the body portion 512; and a coupling portion 514 formed at another side of the body portion 512. An inner circumferential surface of the receiving space 511 forms a frictional surface 515.

A coupling portion 522 is formed at one side of the cylindrical body portion 512 having a certain length and outer diameter thus to constitute the rod 520.

The guide bar 530 has an outer diameter smaller than an outer diameter of the cylindrical body portion 521 of the rod, and has a certain length. The guide bar 530 is provided at the end of the cylindrical body portion 521. The guide bar 530 can be integrally formed with the rod 520, or can be separately manufactured thus to be coupled to the rod 520.

The variable volume frictional means B comprises a cylindrical body 560 having a certain outer diameter and a length and having one side wall coupled to an end portion of the guide bar 530 thus to be volume-varied in itself; an inflow path 561 formed at one side of the cylindrical body 560; an outflow path 562 having less air flow amount than the inflow path 561 and formed at another side of the cylindrical body 560; a first valve 570 for controlling a flow of air introduced into the cylindrical body 560; and a first friction ring 580 coupled to an outer circumferential surface of the cylindrical body 560.

The cylindrical body 560 comprises a circumferential wall portion 563 having a certain thickness and outer diameter; a first side wall portion 564 for covering one side of the circumferential wall portion 563; and a second side wall portion 565 for covering another side of the circumferential wall portion 563. An end portion of the guide bar 530 is coupled to the center of the first side wall portion 564.

The circumferential wall portion 563 of the cylindrical body 560 is formed of a flexible membrane to be expanded.

The inflow path 561 is formed at the first side wall portion 564 of the cylindrical body, and the outflow path 562 is formed at the second side wall portion 565 of the cylindrical body.

The inflow path 561 is formed of a plurality of penetration holes penetrated at the first side wall portion 564, and inner diameters of the penetration holes are the same. The outflow path 562 is formed of one penetration hole or a plurality of penetration holes, a size of the penetration hole of the outflow path 562 is the same as a size of the penetration hole of the inflow path 561, and the number of the penetration holes of the outflow path 562 is less than the number of the penetration holes o the inflow path 561. Also, an entire area of the inflow path 561 is larger than an entire area of the outflow path 562, and shapes of the inflow path 561 and the outflow path 562 can be variously implemented.

The first valve 570 is mounted at the first side wall portion 564 of the cylindrical body thus to open and close the inflow path 561.

The first friction ring 580 is formed of a circular shape having a certain thickness and width, and can be formed of a material expandable in a circumferential direction. The first friction ring 580 does not receive a vertical force with an inner circumferential surface of the receiving space 511 of the cylinder 510 when the cylindrical body 560 is not expanded in itself, and receives the vertical force when the cylindrical body 560 is expanded in itself.

The volume type slider S comprises a cylindrical body 540 having a certain outer diameter and length and provided with an insertion hole 541 for penetration-inserting the guide bar 530 at the center thereof; a penetration path 542 for penetrating the cylindrical body 540; and a second valve 590 for opening and closing the penetration path 542.

The cylindrical body 540 of the volume type slider S comprises a circumferential wall portion 543 having a certain thickness and outer diameter; a first side wall portion 544 for covering one side of the circumferential wall portion 543; and a second side wall portion 545 for covering another side of the circumferential wall portion 543. The insertion hole 541 is penetratingly-formed at the center of the first side wall portion 544 and at the center of the second side wall portion 545, respectively.

The penetration path 542 is constituted with a plurality of penetration holes formed at the first side wall portion 544 of the cylindrical body and a plurality of penetration holes formed at the second side wall portion 545.

The second valve 590 is mounted at the second side wall portion 545 of the cylindrical body thus to open and close the penetration holes formed at the second side wall portion 545.

The volume type slider S is positioned between the variable volume frictional means B and the rod 520, and a hermetic space A is formed between the variable volume frictional means B and the volume type slider S.

The frictional member 550 is formed as a ring shape having a certain thickness and width. Under a state that the frictional member 550 is coupled to the cylindrical body 540 of the volume type slider, when a vibration width more than a preset degree is transmitted to the frictional member 550 adhered to the frictional surface 515 of the cylinder, that is, when a force more than a preset degree is applied, the frictional member 550 performs a relative movement with the frictional surface 515 of the cylinder and thereby a frictional force is generated.

Figure 6 is a frontal section view showing another embodiment of the variable damping type damper according to the present invention. The same reference numbers were given to the same parts as the aforementioned variable damping type damper.

As shown, the variable damping type damper has the same construction as the aforementioned variable damping type damper. That is, constructions of the cylinder 510, the variable volume frictional means B, the volume type slider S, and the frictional member 550 are the same.

A flexible tube 600 is provided between the variable volume frictional means B and the volume type slider S. The flexible tube 600 prevents collision generated when the variable volume frictional means B and the volume type slider S perform a relative movement, and prevents outflow of air.

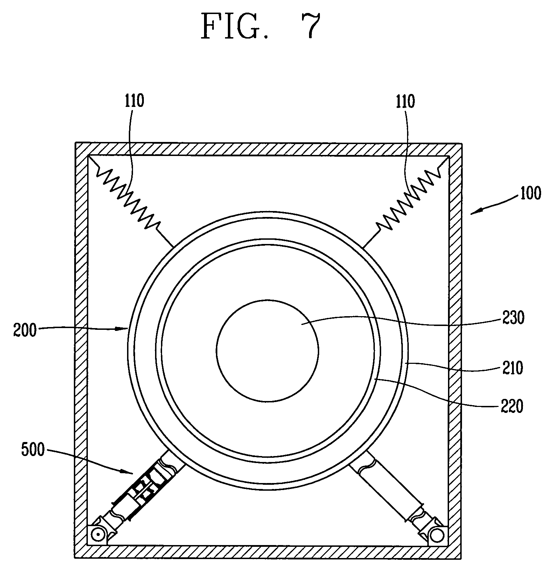

Figure 7 is a frontal section view showing a washing machine provided with the variable damping type damper according to the present invention.

As shown, the washing machine comprises: a cabinet 100 having an inner space of a predetermined shape; a tub assembly 200 positioned in the cabinet 100; a spring 110 for connecting an upper portion of the tub assembly 200 and the cabinet 100; a cylinder 510 of which one side is provided with a receiving space 511 having a certain depth and another side thereof is coupled to the tub assembly 200; a rod 520 of which one side is relative-movably inserted into the receiving space 511 of the cylinder and another side thereof is coupled to the cabinet 100; a guide bar 530 provided at an end portion of the rod 520; a variable volume frictional means B expanded and contracted in itself by a difference of flow amount introduced/ exhausted into/from an inner space by being coupled to the guide bar 530, and adhered/detached to/from an inner circumferential surface of the receiving space 511 of the cylinder; a volume type slider S performing a relative movement with the variable volume frictional means B by being slidably inserted into the guide bar 530, for causing fluid flow inside the variable volume frictional means B; and a frictional member 550 fixedly coupled to the volume type slider S for generating a frictional force with the inner circumferential surface of the receiving space 511 of the cylinder.

The tub assembly 200 comprises a tub 210 positioned in the cabinet 100; a drum 220 rotatably inserted into the tub 210 and through which laundry is put into; and a driving motor 230 mounted at a rear surface of the tub 210 for rotating the drum 220.

One side of the cylinder 510 can be coupled to the cabinet 100, and one side of the rod 520 can be coupled to the tub assembly 200.

Also, a water supply means (not shown) for supplying washing water into the tub 210, a drain means (not shown) for draining washing water inside the tub 210, and a door (not shown) for opening and closing the drum 220 are provided.

The cylinder 510, the rod 520, the guide bar 530, the variable volume frictional means B, the volume type slider S, and the frictional member 550 have the same constructions. Accordingly, minute explanations for the variable damping type damper will be omitted.

Hereinafter, effects of the variable damping type damper and the washing machine having the same will be explained.

First, in case of the variable damping type damper, in a process that steady state vibration is applied to the cylinder 510 from outside, the frictional surface 515 of the cylinder 510 and the frictional member 550 are in a state of being adhered to each other and a vertical force has not been applied between the first friction ring 580 and the frictional surface 515 of the cylinder 510. According to this, the volume type slider S, the frictional member 550, and the cylinder 510 become integral, so that the volume type slider S moves along the guide bar 530, and the variable volume frictional means B, the guide bar 530, and the rod 520 do not move.

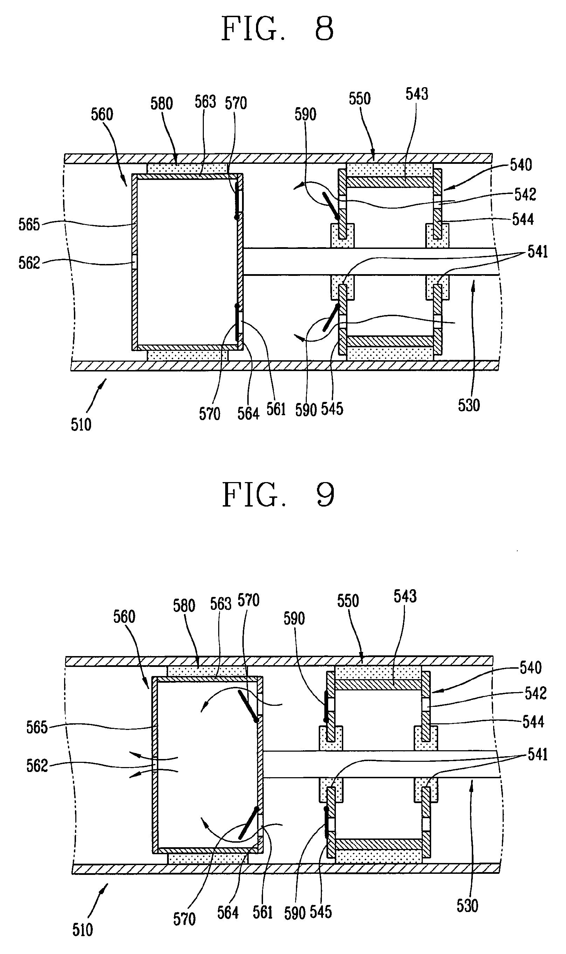

At this time, as shown in Figure 8, when the volume type slider S moves towards the rod 520, a volume of the hermetic space A between the volume type slider S and the variable volume frictional member 550 is increased. According to this, by a pressure difference, the first valve 570 of the variable volume frictional means B is closed, at the same time the second valve 590 of the volume type slider S is opened, and external air is introduced into the hermetic space A through the penetration path 542.

Also, as shown in Figure 9, when the volume type slider S moves towards the variable volume frictional means B, a volume of the hermetic space A is decreased and a pressure is increased. According to this, the first valve 570 of the variable volume frictional means B is opened and the second valve 590 is closed, so that air of the hermetic space A is exhausted outwardly through the inflow path 561 and the outflow path 562. Herein, since a movement of the volume type slider S is a little, air introduced into the inflow path 561 of the variable volume frictional means is smoothly exhausted through the outflow path 562 without a flow resistance of fluid.

By said processes, steady state vibration transmitted to the cylinder 510 or the rod 520 is absorbed.

Additionally, in a process that transient state vibration is applied to the cylinder 510 from outside, the frictional surface 515 of the cylinder 510 and the frictional member 550 are in a state of being adhered to each other and a vertical force has not been applied between the first friction ring 580 and the frictional surface 515 of the cylinder 510. According to this, the volume type slider S, the frictional member 550, and the cylinder 510 become integral, so that the volume type slider S moves along the guide bar 530, and the variable volume frictional means B, the guide bar 530, and the rod 520 do not move.

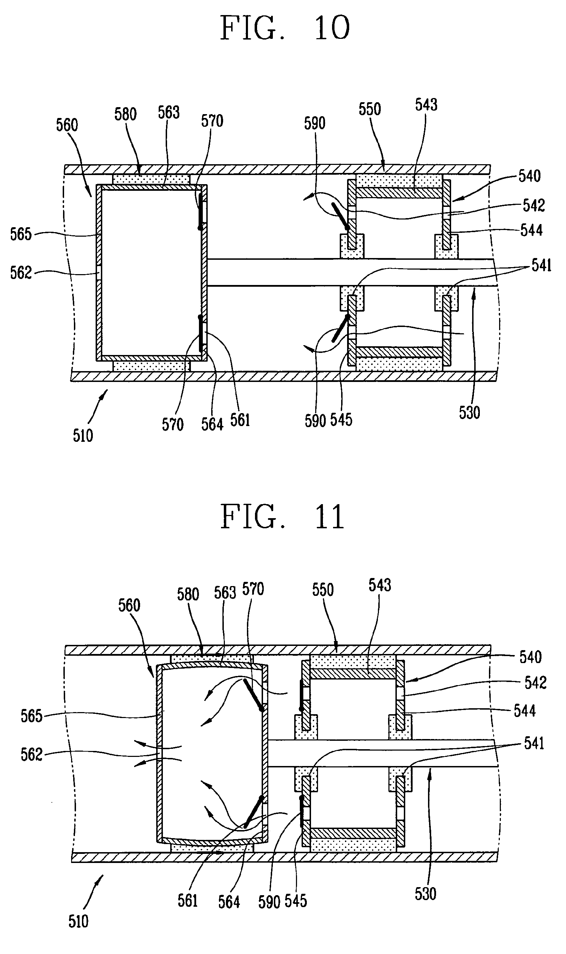

At this time, as shown in Figure 10, when the volume type slider S moves with a great displacement towards the rod 520, a volume of the hermetic space A between the volume type slider S and the variable volume frictional member 550 is increased. According to this, by a pressure difference, the first valve 570 of the variable volume frictional means B is closed, at the same time the second valve 590 of the volume type slider S is opened, and external air is relatively much introduced into the hermetic space A through the penetration path 542.

Also, as shown in Figure 11, when the volume type slider S moves with a great displacement towards the variable volume frictional means B, a volume of the hermetic space A is relatively decreased and a pressure is increased. According to this, the first valve 570 of the variable volume frictional means B is opened and the second valve 590 is closed, so that air of the hermetic space A is introduced into the variable volume frictional means B through the inflow path 561. A part of the air introduced into the variable volume frictional means B is exhausted outwardly through the outflow path 562, and by the rest air, the variable volume frictional means B is expanded thus to be adhered to the frictional surface of the cylinder 510.

That is, since the inflow path 561 of the variable volume frictional means B is larger than the outflow path 562, when a large amount of air is momentarily introduced into variable volume frictional means B, all the introduced air are not exhausted outwardly through the outflow path 562 thus to expand a volume of the cylindrical body 560 of the variable volume frictional means. According to this, the first friction ring 580 is adhered to the frictional surface 515 of the cylinder thus to cause a frictional force. A degree of the frictional force can be different by controlling sizes of the inflow path 561 and the outflow path 562 of the variable volume frictional means B.

Accordingly as said processes are repeated, transient state vibration transmitted to the cylinder 510 or the rod 520 is absorbed.

Like this, the variable damping type damper absorbs both steady state vibration and transient state vibration.

Meanwhile, in a case that the flexible tube 600 is provided between the variable volume frictional means B and the volume type slider S, air is prevented from being leaked outside the hermetic space A thus to have a good responsiveness. Also, in a case that a displacement of the cylinder 510 is great, collision between components is prevented.

The washing machine is operated by a washing operation, a rinsing operation, and a dehydration operation as a general one.

In a process for reaching a dehydration speed of a high speed under a normal state or for stopping a driving at the dehydration speed of a normal state, transient state vibration is generated from the tub assembly 200 and the vibration is transmitted to the variable damping type damper 500. When transient state vibration is transmitted to the variable damping type damper 500, as aforementioned, the variable damping type damper 500 is operated in a transient state vibration mode thus to absorb transient state vibration. According to this, a transmission of transient state vibration generated from the tub assembly 200 to the cabinet 100 is minimized.

Additionally, while a washing operation is performed or a dehydration operation is performed at a dehydration speed of a normal state, steady state vibration is generated from the tub assembly 200 and the vibration is transmitted to the variable damping type damper 500. When steady state vibration is transmitted to the variable damping type damper 500, as aforementioned, the variable damping type damper 500 is operated in a steady state vibration mode thus to absorb steady state vibration. According to this, a transmission of steady state vibration generated from the tub assembly 200 to the cabinet 100 is minimized.

Like this, in the washing machine, both transient state vibration and steady state vibration generated from the tub assembly 200 during the entire operation are absorbed thus to minimize vibration noise generated from the cabinet 100.

As aforementioned, the variable damping type damper according to the present invention absorbs both steady state vibration and transient state vibration transmitted from another system by using a flow amount difference of air, thereby preventing vibration from being transmitted to other components. Thus, a reliability and a stability of a system to which the variable damping type damper is applied can be enhanced.

Also, in the washing machine having the variable damping type damper according to the present invention, transient state vibration and steady state vibration generated from the tub assembly 200 are prevented from being transmitted to the cabinet 100 during the entire process for washing laundry, thereby minimizing vibration noise leaked to outside and thus enhancing a reliability of a product.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A variable damping type damper comprising:
a cylinder provided with a receiving space having a certain depth at one side thereof;
a rod relative-movably inserted into the receiving space of the cylinder;
a guide bar provided at the rod;
a variable volume frictional means expanded and contracted in itself by a difference of flow amount introduced/ exhausted into/from an inner space by being coupled to the guide bar, and adhered/detached to/from an inner circumferential surface of the receiving space of the cylinder;
a volume type slider performing a relative movement with the variable volume frictional means by being slidably inserted into the guide bar, for causing fluid flow inside the variable volume frictional means; and
a frictional member fixedly coupled to the volume type slider for generating a frictional force with the inner circumferential surface of the receiving space of the cylinder.

2. The damper of claim 1, wherein the guide bar has a certain length and has an outer diameter smaller than an outer diameter of the rod.

3. The damper of claim 1, wherein a penetration hole connected to the receiving space is formed at one side of a circumferential wall of the cylinder.

4. The damper of claim 1, wherein an inner circumferential surface of the receiving space of the cylinder is a frictional surface.

5. The damper of claim 1, wherein the variable volume frictional means comprises:
a cylindrical body having a certain outer diameter and a length and having one side wall coupled to an end portion of the guide bar thus to be volume-varied in itself;
an inflow path formed at one side of the cylindrical body;
an outflow path having less air flow amount than the inflow path and formed at another side of the cylindrical body;
a first valve for controlling a flow of air introduced into the cylindrical body; and
a first friction ring coupled to an outer circumferential surface of the cylindrical body.

6. The damper of claim 5, wherein a circumferential wall of the cylindrical body is formed of a flexible membrane.

7. The damper of claim 5, wherein the inflow path is formed at a side wall of a cylindrical body to which an end of a rod is coupled, and the outflow path is formed at an opposite side wall of the cylindrical body.

8. The damper of claim 7, wherein the inflow path is formed of a plurality of penetration holes having the same inner diameter, and the outflow path is formed of penetration holes having the number less than the number of the penetration holes of the inflow path.

9. The damper of claim 5, wherein the first valve is mounted at the inflow path.

10. The damper of claim 5, wherein the first friction ring is formed as a circular shape having a certain thickness and width, and is expandable in a circumferential direction.

11. The damper of claim 5, wherein the first friction ring does not receive a vertical force with an inner circumferential surface of the receiving space of the cylinder when the cylindrical body is not expanded in itself, and receives the vertical force when the cylindrical body is expanded in itself.

12. The damper of claim 1, wherein the volume type slider comprises:
a cylindrical body having a certain outer diameter and length and provided with an insertion hole for penetration-inserting the guide bar at the center thereof;
a penetration path for penetrating the cylindrical body; and
a second valve for opening and closing the penetration path.

13. The damper of claim 1, wherein a frictional force due to a relative movement between the frictional member and an inner circumferential surface of the receiving space of the cylinder is generated at the time of exceeding a preset vibration width.

14. The damper of claim 1, wherein a flexible tube for preventing collision and air leakage is provided between the variable volume frictional means and the volume type slider.

15. A washing machine comprising a cabinet having an inner space of a predetermined shape; and a tub positioned in the cabinet and filled with washing water, the washing machine provided with a variable damping type damper, comprising:
a cylinder of which one side is provided with a receiving space having a certain depth and another side thereof is coupled to the cabinet or the tub;
a rod of which one side is relative-movably inserted into the receiving space of the cylinder and another side thereof is coupled to the cabinet or the tub;
a guide bar provided at an end portion of the rod;
a variable volume frictional means expanded and contracted in itself by a difference of flow amount introduced/ exhausted into/from an inner space by being coupled to the guide bar, and adhered/detached to/from an inner circumferential surface of the receiving space of the cylinder;
a volume type slider performing a relative movement with the variable volume frictional means by being slidably inserted into the guide bar, for causing fluid flow inside the variable volume frictional means; and
a frictional member fixedly coupled to the volume type slider for generating a frictional force with the inner circumferential surface of the receiving space of the cylinder.
